# EUROPÄISCHE PATENTSCHRIFT

(11) **EP 1 281 856 B1**
(45) Veröffentlichungstag und Bekanntmachung des Hinweises auf die Patenterteilung: **06.07.2005**
(21) Anmeldenummer: 02017175.7
(22) Anmeldetag: 31.07.2002
(51) Int. Cl.: F02G 5/04, F24D 11/02, F24D 11/00

(54) **Verfahren zum Erzeugen von Heizenergie**
Process fot producing heat energy
Procédé de production d'énergie de chauffage

(30) Priorität: 03.08.2001 DE 10138181
(43) Veröffentlichungstag der Anmeldung: 05.02.2003
(73) Patentinhaber: ELZET ELEKTROTECHNIK GmbH, D-41836 Hückelhoven (DE)
(72) Erfinder: Zieher, Wolfgang, 41836 Hückelhoven (DE)
(74) Vertreter: von Creytz, Dietrich, Dipl.-Phys.

(56) Entgegenhaltungen:
- EP-A- 0 940 637
- WO-A-99/20884
- DE-A- 3 151 187
- DE-U- 9 302 802
- DE-U- 29 718 545
- PATENT ABSTRACTS OF JAPAN vol. 1999, no. 10, 31. August 1999 (1999-08-31) & JP 11 141308 A (WAERTSILAE NSD OY AB), 25. Mai 1999 (1999-05-25)

## Beschreibung

Die Erfindung betrifft ein Verfahren gemäß Patentanspruch zum Erzeugen von an Energie-Versorgungsuntemehmen zu lieferndem, elektrischem Strom, der in einer Kraft-Wärme-Kopplungsanlage aus nativem Pflanzenöl mit Hilfe einer Motor-Generator-Kombination - bei Nutzung der bei der Stromerzeugung freiwerdenden Wärme zum Betrieb einer Heizung - gewonnen wird.

Für den Betrieb der Heizanlagen von Wohnungen, Häusern, Fabriken usw. wird u.a. aus Mineralöl gewonnenes Heizöl verwendet. Bei der Verbrennung dieses Erdölprodukts entsteht (neben diversen giftigen Substanzen) Kohlendioxid, welches zur Erwärmung der Erdatmosphäre beitragen kann. Die auf der Erde vorhandene Menge an Mineralöl ist begrenzt.

Kraft-Wärme-Kopplungs-Anlagen sind allgemein bekannt. Sie werden mit Kohle, Erdöl oder Erdgas als Energielieferant, z. B. in Form sogenannter Blockkraftwerke, betrieben. Ihr Vorteil wird darin gesehen, daß es möglich ist, die bei der Stromerzeugung anfallende Abwärme zur Beheizung von Gebäuden, ja ganzer Stadtteile, zu nutzen. Da aber der Bedarf der Gebäude wetter- und jahreszeitabhängig ist, kann die bei einer dem momentanen Strombedarf entsprechend optimierten Stromerzeugung anfallende (Ab-)Wärme nur zum Teil für die Gebäudeheizung verwendet bzw. verkauft werden.

EP 09 40 637 A2 beschreibt eine Kombi-Anlage zum Erzeugen sowohl von Wärmeenergie als auch von elektrischem Strom. Die Anlage dient dazu, Strom in einer sogenannten "Insellage", wo ein öffentliches Netz nicht zur Verfügung steht, bereitzustellen. Die bei der Stromerzeugung anfallende Wärmeenergie kann zum Heizen von Räumen oder Haushaltsgeräten benutzt werden. Die Anlage schaltet also unabhängig vom Bedarf an Wärmeenergie ein oder aus. Ein solcher Betrieb ist zwar bei einer Insellage sinnvoll, wird aber unwirtschaftlich, wenn man elektrischen Strom aus dem öffentlichen Netz entnehmen kann.

In DE 297 18 545 U1 wird ein Aufrüstungsaggregat zur Funktionserweiterung eines Kraftfahrzeugs beschrieben, bei dem der Antriebsmotor als Aggregat zur Kraft-Wärme-Kopplung umfunktioniert wird, obwohl ein solcher Motor zwar für mechanische Arbeit aber gerade nicht für die Abgabe von Wärme optimiert ist. Im Bekannten wird daher eine wärmelastabhängige Regelung der Energiezufuhr gebraucht. In DE 297 18 545 U1 wird ferner gesagt, daß zum Betrieb des Fahrzeugmotors Rapsöl oder Biomasse-Methangas verwendet werde könnten. Der Fachmann weiß jedoch, daß sich ein normaler (im Bekannten vorgesehener) Dieselmotor nicht ohne Umbau mit Methangas oder Rapsöl - sondern höchstens bzw. nur mit Biodiesel - betreiben läßt. Biodiesel ist chemisch in einen Methylester umgewandeltes Rapsöl. Es ist im Gegensatz zu nativem Rapsöl giftig und biologisch nicht abbaubar.

In DE 93 02 802 U1 wird eine Kraft-Wärme-Kopplungsanlage beschrieben, deren Hauptmerkmal darin besteht, daß die bei Strombedarf entstehende Wärme nicht sofort verbraucht werden muß, sondern als heißes Wasser in einem Behälter zu speichern ist. Dadurch können die Stromerzeugung und der Wärmeverbrauch zeitlich entzerrt werden.

In DE 196 501 83 A1 wird eine Art der Wärmerückgewinnung beschrieben, die auch zur Kühlung von Gebäuden (Klimaanlage) verwendet werden können soll. Es handelt sich um die Anwendung einer Wärmepumpe.

In DE 41 02 636 C2 wird offenbart, wie man den elektrischen Strom, der bei einer herkömmlichen Kraft-Wärme-Kopplung erzeugt wird, zur zusätzlichen Wärmeerzeugung benutzen kann.

Auch in WO 99/20884 wird eine Kraft-Wärme-Kopplung angegeben, welche neben einem Wärmekreislauf auch einen Kühlkreislauf beschreibt (Wärmepumpenanwendung). Auf diese Weise kann ein Gebäude geheizt und/oder gekühlt werden (Klimaanlage).

Aus der deutschen Zeitschrift "impulse", Das Untemehmermagazin, Eupener Str. 70, 50933 Köln, Juli 2001, Seite 16, ist es bekannt, aus nativem Pflanzenöl Strom - quasi in einer als Öko-Kraftwerk ausgebildeten Anlage - zu erzeugen. Unter dem Begriff "natives Pflanzenöl" wird hier und im Rahmen der Erfindung chemisch im wesentlichen unverändertes Öl aus Raps, Sonnenblumen und anderem Pflanzensamen verstanden.

Der Erfindung liegt die Aufgabe zugrunde, eine wirtschaftliche Heizanlage bzw. Wärmeversorgung für kleinere Einheiten, wie Wohnungen oder Ein- und Zweifamilienhäuser, aber auch für größere Gebäude, Stadtteile oder Ortschaften, Fabrikanlagen usw. zu schaffen. Mit anderen Worten ist es Ziel der vorliegenden Erfindung, ein Beheizungssystem zu schaffen, das den herkömmlichen Beheizungsanlagen sowohl ökologisch als auch ökonomisch überlegen ist.

Die erfindungsgemäße Lösung wird im Anspruch 1 angegeben. Vorzugsweise besteht die erfindungsgemäße Lösung für das eingangs genannte Verfahren, bei dem die bei der Stromerzeugung frei werdende Wärme zum Betrieb einer Heizung genutzt und die eingesetzte Wärmeenergie aus nativem Pflanzenöl gewonnen wird, darin, daß die Anlage nur abhängig vom Wärmebedarf eines oder mehrerer zu beheizender Gebäude bzw. Gebäudeteile und im Hinblick auf die optimale Erzeugung von Heizenergie für eine Wohnung, ein Ein- oder Mehrfamilienhaus bis hin zu einem Stadtteil sowie im Wesentlichen ohne Rücksicht auf die elektrische Leistung betrieben wird. Die Erfindung läßt sich bevorzugt auch definieren als Verfahren zum Betrieb einer Heizanlage mit Kraft-Wärme-Kopplung, in welcher nur natives Pflanzenöl als Energielieferant eingesetzt wird und welche im Hinblick auf Erzeugung von Heizenergie optimiert wird. Hauptprodukt ist also bei der Erfindung die gewonnene Heizenergie, während der zugleich erzeugte elektrische Strom als Nebenprodukt anzusehen ist.

Der durch die Erfindung zu erreichende ökologische Vorteil besteht vor allem darin, daß fossile Brennstoffe (Kohle, Mineralöl, Erdgas) nicht verwendet werden. Zum Betrieb der Anlage wird "natives Pflanzenöl", das heißt unverändertes Pflanzenöl, verwendet. Durch dieses Pflanzenöl als nachwachsendem Rohstoff entsteht bei dem Betrieb der erfindungsgemäßen Anlage keine Netto-Kohlendioxid-Belastung der Atmosphäre, was einen erheblichen ökologischen Vorteil bedeutet. Das bei der Verbrennung entstehende Kohlendioxid wird nämlich durch die neu nachwachsenden Rohstoffe wieder gebunden. Der in diesem Zusammenhang an sich unerwartete ökonomische Vorteil besteht darin, daß durch Anwendung der Erfindung Öko-Strom erzeugt wird, der - nach gesetzlichen Bestimmungen (in Deutschland nach dem Erneuerbare-Energien-Gesetz, EEG) - zu einem Mindestpreis von den Elektro-Versorgungs-Unternehmen abgenommen werden muß.

Im Stand der Technik werden alle möglichen Vorschläge zur Optimierung der Elektroleistung im Zusammenhang mit der Kraft-Wärme-Kopplung gemacht. Demgegenüber wird durch die Erfindung eine im Hinblick auf eine optimale Heizleistung betriebene Kraft-Wärme-Kopplungsanlage geschaffen, in welcher die eingesetzte Wärmeenergie aus nativem Pflanzenöl - insbesondere durch Verbrennung desselben - gewonnen wird. Im Kern besteht die vorliegende Erfindung also darin, eine Kraft-Wärme-Kopplungsanlage mit "nativem" Pflanzenöl und im Hinblick auf eine "optimierte Heizleistung" - und im wesentlichen ohne Rücksicht auf die (als vorteilhaftes Anfallprodukt verwertete) elektrische Leistung - zu betreiben.

Die Auslegung im Hinblick auf eine optimierte Heizleistung ist nicht zu verwechseln beispielsweise mit der aus dem oben genannten Gebrauchsmuster DE 297 18 545 U1 bekannten wärmelastabhängigen Regelung. Der dort für die Kraft-Wärme-Kopplung vorgesehene Fahrzeugmotor war nämlich seitens des Motorenherstellers für die Abgabe mechanischer Leistung bei verschiedenen Drehzahlen entwickelt und optimiert worden. Die zugehörige Steuerungseinheit regelt daher "warmelastabhangig". Wird also der Warmwasserverbrauch erhöht, müssen (wegen der Wärmelastabhängigkeit) gleichzeitig "Gas gegeben" (Treibstoffzufuhr) und die Stromabgabe des Generators erhöht werden - sonst würde die Drehzahl des Motors steigen und somit keine phasenrichtige Wechselstromeinspeisung mehr möglich sein. Dadurch, daß der Fahrzeugmotor mehr mechanische Arbeit leisten muß, wird mehr Brennstoff verbraucht und somit auch mehr Wärme produziert. Die bekannte wärmelastabhängige Regelung schließt also eine optimierte Heizleistung aus.

Bei Anwendung des erfindungsgemäßen Verfahrens ist für die Heizaufgabe (mit optimierter Heizleistung) eine wärmelastabhängige Steuerung gerade nicht erwünscht. Die erfindungsgemäße Optimierung der Heizleistung ist bereits im Rahmen der konstruktiven Vorgaben der verwendeten Anlage möglich Man kann z.B. über die Steuerzeiten der Ein- und Auslaßventile den thermischen Wirkungsgrad zu Lasten des mechanischen Wirkungsgrads erhöhen. Bei Anwendung genügt ein intermittierender Betrieb, das heißt wie beim herkömmlichen Heizkessel wird die Anlage bei Unterschreitung einer vorgegebenen Vor- oder Rücklauftemperatur in Betrieb genommen, und wenn die Zieltemperatur erreicht ist, schaltet sich die Anlage wieder ab.

Grundsätzlich kann die im nativen Pflanzenöl enthaltene Wärmeenergie im Rahmen der Erfindung auf irgend eine Weise für den Betrieb der jeweiligen Heizung freigesetzt werden, z. B. auch durch Verbrennen zwecks Erhitzung eines Kessels oder in einem Magneto-Hydrodynamischen Generator (MHD). Bevorzugt wird aber - speziell bei der Heizung der kleineren Einheiten, wie Wohnungen oder Ein- und Zweifamilienhäuser usw., der unmittelbare Einsatz des nativen Pflanzenöls zum Betrieb eines entsprechend konzipierten Motors, vorzugsweise Dieselmotor, mit nachgeschaltetem Generator. In jedem Fall soll eine solche Motor-Generator-Kombination im Hinblick auf hohe Abwärme, d.h. auf eine möglichst große Heizleistung ausgebildet werden.

Wie gesagt, das Hauptprodukt im Rahmen der Erfindung ist die an eine Heizanlage abzugebende bzw. für eine solche Anlage mit optimalem Wirkungsgrad erzeugte Wärmeenergie, wobei aber das zugleich erzeugte Nebenprodukt, der elektrische Strom, in der Menge, in der er gerade ab- bzw anfällt, gesondert mit Vorteil zu verwerten ist. Im Gegensatz zu der aus der DE-Zeitschrift "Impulse" bekannten Kraft-Anlage mit optimierter Stromerzeugung aus nativem Pflanzenöl wird nämlich die erfindungsgemäß vorgesehene Anlage als Heiz-Anlage konzipiert und entsprechend auf optimierte Wärmeerzeugung angelegt.

Die erfindungsgemäße Einrichtung soll so ausgebildet und betrieben werden, daß sie ihre Aufgabe als Heizung optimal erfüllen kann. Der als "Abfall" entstehende elektrische Strom kann verkauft werden. Ein großer Vorteil ist dabei darin zu sehen, daß die Anlage den "Abfall-Strom" gerade dann liefert, wenn er am meisten benotigt wird, nämlich, wenn die Heizanlage - bei kühler Witterung, z B. im Winter - betrieben wird. Im Sommer dagegen, wenn weniger elektrischer Strom gebraucht wird, arbeitet die Heiz-Anlage ohnehin (wegen geringeren Warmebedarfs) nur selten.

Auch im übrigen ist der durch die Erfindung zu erreichende Vorteil beträchtlich: Es wird eine Heizung geschaffen, welche nebenbei elektrischen Strom erzeugt. Wenn also der Besitzer einer erfindungsgemäßen Heizung Wärme braucht und demgemäß seine Anlage einschaltet, erzeugt er zugleich Strom, den er verkauft. Er kann also mit seiner Heizung quasi Geld zum Ausgleich wenigstens eines Teiles seiner Heizkosten verdienen. Der dabei anfallende elektrische Strom muß in Deutschland den gesetzlichen Regeln entsprechend vom nächsten Elektro-Versorgungsunternehmen zu einem gesetzlich festgesetzten Preis - derzeit ab EURO 0,09 pro KWh - abgenommen werden. Außerdem ist das erfindungsgemäß eingesetzte native Pflanzenöl (in Deutschland im wesentlichen steuerfrei) derzeit billiger zu kaufen als herkömmlich verwendetes mineralisches Heizöl.

## Patentansprüche

1. Verfahren zum Erzeugen von an Energie-Versorgungsunternehmen zu lieferndem, elektrischem Strom, der in einer Kraft-Wärme-Kopplungsanlage aus nativem Pflanzenöl mit Hilfe einer Motor-Generator-Kombination - bei Nutzung der bei der Stromerzeugung frei werdenden Wärme zum Betrieb einer Heizung - gewonnen wird, **dadurch gekennzeichnet, daß** die Anlage nur abhängig vom Wärmebedarf eines oder mehrerer zu beheizender Gebäude bzw. Gebäudeteile und im Hinblick auf die optimale Erzeugung von Heizenergie für eine Wohnung, ein Ein- oder Mehrfamilienhaus bis hin zu einem Stadtteil sowie im Wesentlichen ohne Rücksicht auf die elektrische Leistung betrieben wird.

## Claims

1. A process for generating electric current to be supplied to electricity supply companies, which is obtained in a combined heat and power plant from native plant oil by means of a motor-generator combination - using the heat that becomes released upon the current generation for operating a building heating system,
**characterised in that** the plant is operated only in dependence on the heat consumption of one or more buildings or building parts to be heated and with regard to the optimal generation of heating energy for a flat, a single occupancy house or an apartment house up to a district and also substantially irrespective of the electric power.

## Revendications

1. Procédé de production d'électricité qui sera fournie à des entreprises de distribution électrique, dans lequel l'électricité est obtenue à partir d'huile végétale native, dans une installation de production combinée électricité-chaleur, au moyen d'un groupe moto-générateur, en utilisant la chaleur se dégageant lors de la production d'électricité pour faire fonctionner un chauffage, **caractérisé en ce que** l'installation n'est exploitée qu'en fonction du besoin en chaleur d'un ou de plusieurs bâtiments, voire d'une ou de plusieurs parties de bâtiment, dans le but de parvenir à une production optimale d'énergie thermique pour un appartement, une maison individuelle, un immeuble collectif ou même un quartier, et **en ce que** cette exploitation est assurée, pour l'essentiel, sans tenir compte de la puissance électrique.
